# EUROPEAN PATENT APPLICATION

(11) **EP 4 481 463 A1**
(43) Date of publication of application: **25.12.2024**
(21) Application number: 23306006.0
(22) Date of filing: 23.06.2023
(51) Int. Cl.: G02B 21/32, G02B 21/36, G06N 10/40

(54) **QUANTUM COMPUTING DEVICE COMPRISING AN OPTICAL SYSTEM FOR IMAGING TRAPPED PARTICLES**

(71) Applicant: Pasqal, 91300 Massy (FR)
(72) Inventor: DUMAS, Arnaud, 91300 MASSY (FR); HAMOT, Clotilde, 91300 MASSY (FR); PARIENTE, Gustave, 91300 MASSY (FR); PELLEGRINO, Jessica, 91300 MASSY (FR)
(74) Representative: Lavoix

(57) **Abstract**

The present invention concerns an optical system (18) for a quantum computing device (1), the quantum computing device (1) comprising:
- a vacuum chamber (12),
- a trapping sites generator (14) able to generate an array of trapping sites for particles in the vacuum chamber (12),
- a detection sensor (16) for detecting electromagnetic flux emitted by particles trapped in the array of trapping sites, the detection sensor (16) comprising a charged-couple device sensor,
- the optical system (18) being configured for imaging, on the detection sensor (16), the electromagnetic flux emitted by each particle trapped in a trapping site,
the optical system (18) comprising an optical steering device configured to optimize the position of the images of the trapped particles on the detection sensor (16) according to the geometry of detection of the detection sensor (16).

## Description

### TECHNICAL FIELD OF THE INVENTION

The present invention concerns an optical system for a quantum computing device. The present invention concerns also such a quantum computing device. The present invention further concerns a method for imaging particles trapped in an array of trapping sites of such a quantum computing device.

### BACKGROUND OF THE INVENTION

The invention is applicable to imaging devices used to image trapped particles in a quantum computing device, such as those that include CCD (charge coupled device) cameras and in particular EMCCD (electron multiplication charge coupled device) cameras, preferably in a neutral atom quantum computing device.

Examples of quantum computing devices based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327.

In these devices, the quantum register is formed with neutral atoms, loaded from a background gas of cold atoms, and trapped in arrays of optical traps, known as optical tweezers. One or more CCD or EMCCD cameras are generally used to acquire images of the quantum register via an optical imaging scheme, for example to measure a fluorescence intensity of the atoms in the register at the end of a computation cycle. EMCCD cameras are especially advantageous to use because of their high sensitivity.

In the case of a neutral atom quantum computing device, the role played by the CCD or EMCCD is very specific: determining whether or not any given trap is occupied or not by a trapped particle. This means that an ideal detection device for n particles is a *n* channels binary detector.

However, the particles are currently imaged on the cameras with a geometry corresponding of the positions of the trapped particles, which does not allow to take full advantage of the properties of such cameras.

### SUMMARY OF THE INVENTION

Hence, there exists a need for a means enabling a better detection of particles trapped in an array of trapping sites while keeping the sensitivity of detection of CCD or EMCCD cameras.

In the following we present an invention where we take advantage of a key property of CCD/EMCCD sensors - namely analog electron sum - in combination with an optical steering device to optimize an imaging scheme for a neutral atom quantum computing device over points 1. 2. and 3 described below:
1. Flexibility. In a neutral atom quantum computing device, the geometry of the n particles is a powerful richness of the device. Therefore, the detection device is advantageously compatible with different geometries of the trapped particles and the usual solution is to perform a fluorescence optical imaging onto a high resolution camera.
2. Sensitivity. The bit error rate shall be minimized which implies high quantum detection efficiency and low electronic read out noise.
3. Speed. As for any quantum computer, the reading time duration is an important factor of performance and this translates into a minimal exposure time for the detection.

By tailoring the optical imaging design under this specificity we can use the detection sensor in an advantageous way. This makes the global imaging function far more performant.

To this end, the invention relates to an optical system for a quantum computing device the quantum computing device comprising:
- a vacuum chamber,
- a trapping sites generator able to generate an array of trapping sites for particles in the vacuum chamber,
- a detection sensor for detecting electromagnetic flux emitted by particles trapped in the array of trapping sites, the detection sensor comprising a charged-couple device (CCD) sensor, the detection sensor having a detection surface with a geometry of detection optimizing the detection of individual elements,
- the optical system being configured for imaging, on the detection sensor, the electromagnetic flux emitted by each particle trapped in a trapping site,
   the optical system comprising an optical steering device configured to optimize the position of the images of the trapped particles on the detection sensor according to the geometry of detection of the detection sensor;

The optical system according to the invention may comprise one or more of the following features considered alone or in any combination that is technically possible:
- the detection sensor is configured to generate images made of superpixels, each superpixel resulting from the binning of multiple adjacent pixels of the images, the position of the superpixels on the images defining the geometry of detection of the detection sensor, the optical steering device being configured to set the position of incidence of each electromagnetic flux on the detection sensor so that the electromagnetic flux emitted by particles trapped in different trapping sites are imaged on different superpixels of the detection sensor;
- each generated trapping site is associated with a superpixel of the detection sensor in a correspondence table, the optical steering device being configured to set the position of incidence of each electromagnetic flux on the detection sensor, so that each electromagnetic flux is imaged on the superpixel associated with the trapping site corresponding to said electromagnetic flux;
- the optical steering device is configured so that each electromagnetic flux emitted by particles trapped in the array of trapping sites is imaged sensibly at the center of a superpixel of the detection sensor;
- the detection sensor is configured to be used sequentially in two modes of operation: a first mode in which individual pixels are read, and a second mode in which only superpixels, formed by grouping adjacent pixels, are read, the first mode being used for calibration of the optical steering device;
- the quantum computing device also comprises a controller configured to reconfigure the optical steering device as a function of the generated array of trapping sites.
- the optical system comprises:
   - a first optical bloc able to collimate, on the optical steering device, the electromagnetic flux emitted by particles trapped in the array of trapping sites, and
   - a second optical bloc able to focus, on the detection sensor, the electromagnetic flux outputting the optical steering device;
- the first optical bloc comprises at least three convergent lenses and the second optical bloc comprises at least one convergent lens;
- the optical steering device is positioned relative to the first optical bloc so that the electromagnetic flux corresponding to different trapping sites are separate when received on the optical steering device ;
- the optical steering device is a micro mirror array device or a spatial light modulator.
- the detection sensor is an electron multiplication charged-coupled device sensor;
- the trapping sites generator comprises:
   - a laser source able to generate a laser beam,
- a beam shaper able to shape the laser beam so as to obtain an array of trapping sites for particles when the laser beam is focused, and
- a focusing unit able to focus the shaped laser beam on a target region of the vacuum chamber so as to generate the array of trapping sites;

The invention also relates to a quantum computing device comprising:
- a vacuum chamber
- a trapping sites generator able to generate an array of trapping sites for particles in the vacuum chamber
- a detection sensor for detecting electromagnetic flux emitted by particles trapped in the array of trapping sites, the detection sensor comprising a charged-couple device (CCD) sensor, the detection sensor having a detection surface with a geometry of detection optimizing the detection of individual elements, and
- an optical system for imaging, on the detection sensor, the electromagnetic flux emitted by each particle trapped in a trapping site;

The invention also relates to a method for imaging particles trapped in an array of trapping sites of a quantum computing device, the method comprising the following steps:
- generating an array of trapping sites in the vacuum chamber by the trapping sites generator,
- loading particles in the array of trapping sites,
- configuring the optical steering device so as to optimize the position of the images of the trapped particles on the detection sensor according to the geometry of detection of the detection sensor, and
- detecting the particles trapped in the trapping sites by the detection sensor;

The method according to the invention may comprise one or more of the following features : the detection sensor is configured to generate images made of superpixels, each superpixel resulting from the binning of multiple adjacent pixels of the images, the position of the superpixels on the images defining the geometry of detection of the detection sensor the method also comprising a step of associating each trapping site with a superpixel of the detection sensor and memorizing the association in a correspondence table, the step of configuring the optical steering device being carried out as a function of the correspondence table, so that each electromagnetic flux is imaged on the superpixel associated with the trapping site corresponding to said electromagnetic flux.

### BRIEF DESCRIPTION OF THE DRAWINGS

The invention will be easier to understand in view of the following description, provided solely as an example and with reference to the appended drawings in which:
- Figure 1 is a schematic view of an example of a quantum computing device comprising in particular a vacuum chamber, a trapping sites generator, a detection sensor and an optical system comprising an optical steering device,
- Figure 2 is a more detailed schematic view of an example of the quantum computing device of figure 1,
- Figure 3 is a more detailed schematic view of an example of the optical system of figure 2 comprising the optical steering device, and
- Figure 4 is a schematic view of an example of, on the left side, an arbitrary 2D array of particles trapped in trapping sites and, on the right side, an example of a regular matrix sensor plane (each square unit being a sensor pixel).

### DETAILED DESCRIPTION OF SOME EMBODIMENTS

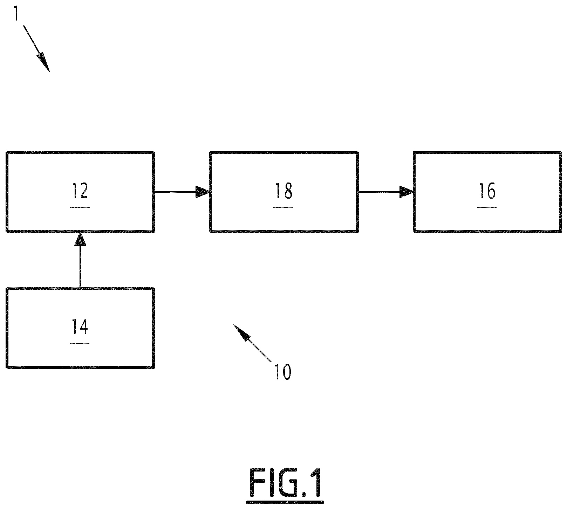

A quantum computing device 1 is schematically illustrated on figure 1.

On this figure 1, to simplify the description, only a part of the components 10 of the quantum computing device 1 are illustrated.

A quantum computing device, or quantum processor, is an array of qubits (also called a qubit register), as well as a hardware for manipulating these qubits. A quantum computing device is adapted to perform quantum operations on qubits.

A quantum computing device uses the quantum properties of matter, such as superposition and entanglement, to perform operations on data. Unlike a classical computer based on transistors working on binary data (coded on bits, 0 or 1), the quantum computing device works on qubits whose quantum state can take a continuous rather than discrete number of values.

In particular, a qubit refers to a two-level quantum mechanical system. For example, a qubit comprises two basic quantum states l0> and l1 > representing the possible quantum states of the qubit. According to the superposition principle of quantum mechanics, any superposition of the form al0> + bl1> (a and b being complex numbers and aa*+bb*=1) is a possible quantum state of the qubit.

In the embodiments of the invention, the array of qubits are generated by trapping particles in trapping sites. The particles are preferably neutral atoms, such as Rubidium atoms or Strontium atoms.

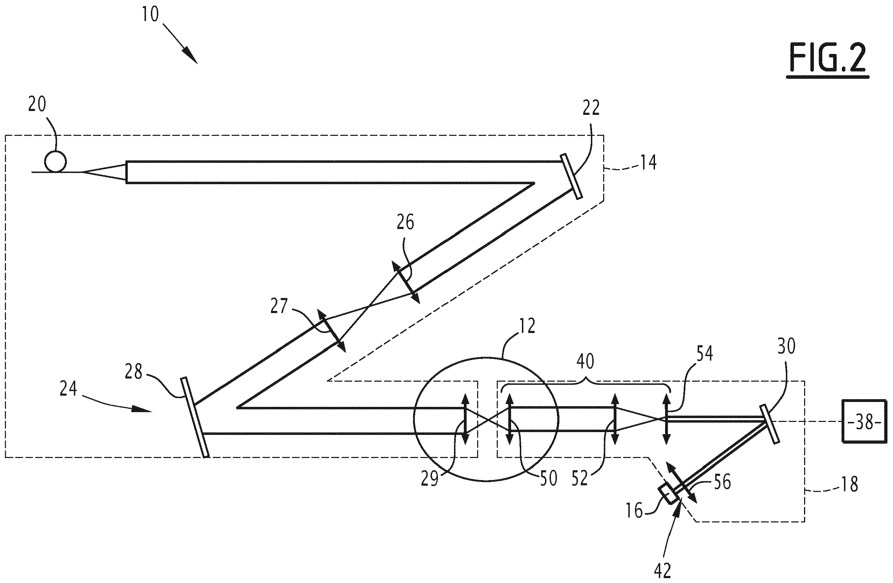

As illustrated on figures 1 and 2, the quantum computing device 1 comprises a vacuum chamber 12, a trapping sites generator 14, a detection sensor 16 and an optical system 18 comprising an optical steering device 30. The quantum computing device 1 also comprises elements for performing operations on qubits, which are not described in detail in what follows.

The vacuum chamber 12 is a vacuum enclosure in which particles are trapped.

For example, for atoms, during use, a vacuum is created in the vacuum chamber 12 and a dilute atomic vapor, created in a different unit, is sent in a magneto-optical trap in the vacuum chamber 12. The quantum register is created by populating at least some of the trapping sites with atoms from the dilute atomic vapor.

Other embodiments are nonetheless possible.

The trapping sites generator 14 is able to generate an array of trapping sites for trapping particles in the vacuum chamber 12.

In an example of implementation, the trapping sites generator 14 comprises a laser source 20, a beam shaper 28 and a focusing unit 29.

The laser source 20 is able to generate a laser beam.

The beam shaper 28 is able to shape the laser beam (e.g., to impart a specific phase/intensity pattern to the laser beam) so as to obtain an array of trapping sites for particles when the laser beam is focused.

The beam shaper 28 is, for example, a spatial light modulator (SLM), such as an optical phase modulator, preferably a liquid crystal optical modulator (LCOS-SLM). In another example, the beam shaper 28 is an acousto-optical deflector (AOD), or a device with metasurfaces.

The focusing unit 29 is able to focus the shaped laser beam on a target region of the vacuum chamber 12 so as to generate the array of trapping sites.

In the example of figure 2, the trapping sites generator 14 comprises:
- a folding mirror 22,
- two convergent lenses 26, 27 in a telescope configuration, and
- a convergent lens 29 placed inside the vacuum chamber 12 for focusing the laser beam on the target region.

Other embodiments are nonetheless possible.

The detection sensor 16 is configured for imaging electromagnetic flux emitted by particles trapped in the array of trapping sites. For example, in the case of atoms, the detection sensor 16 is suitable to detect the fluorescence emitted from the atoms trapped in the trapping sites. The detection sensor 16 has a detection surface with a geometry of detection optimizing the detection of individual elements. It means that the detection depends on the position, on the detection surface, of the image or flux relative of an individual element, and can be optimized if such positions fulfilled the geometry of detection.

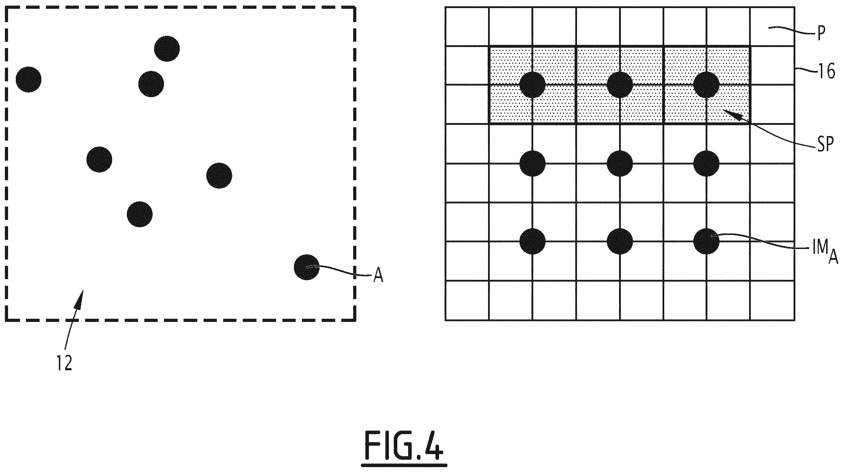

More precisely, the detection sensor 16 is a charged-couple device (CCD) sensor, which can be used in a so-called pixel binning mode. In this pixel binning mode adjacent pixels can be grouped together so that the light-induced electric charges generated by said grouped adjacent pixels is combined together prior to readout, thus forming so-called superpixels. In other words, each superpixel results from the binning of the outputs of multiple adjacent pixels of the image. The superpixel is obtained from flux summed at the hardware level (e.g., during charge transfer prior to readout) without adding noise. Each superpixel in the illustrated example is formed of 2x2 pixel (see figure 4), but other geometries and/or more pixels can be used (1×4, 3×3, 4×4...).

More preferably, the detection sensor 16 is an electron multiplication charged-coupled device (EMCCD) sensor.

In some embodiments, the detection sensor 16 can be used sequentially in two modes of operation: a first mode in which individual pixels are read, and a second mode in which only superpixels are read (the so-called pixel binning mode described above). In that case, preferably, the first mode of operation is used for calibration of the optical steering device 30. In other words, prior to operation in the binning mode, the detection sensor 16 can be initially calibrated so that the beams/images are placed more precisely on the center of the superpixels (the rationale being that it is easier to locate the position of said beams/images on the detector with the higher resolution provided by the grid of individual pixels, rather than with the coarser grid of superpixels).

The optical system 18 is able to image, on the detection sensor 16, the electromagnetic flux emitted by each particle trapped in a trapping site.

The optical system 18 comprises the optical steering device 30 which is configured to modify the electromagnetic flux direction - the modification being dependent on the position on the steering device 30. The optical steering device 30 is configured to optimize the position of the images of the trapped particles on the detection sensor 16 according to the geometry of detection of the detection sensor 16.

Therefore, the electromagnetic flux coming from the trapped particles is collected on the detection sensor 16 with a different programmable geometry, the programmable geometry being associated to the steering device 30. As a special case, the final geometry can be chosen such that the image of trapped particles is regular, which is the favourable case for the use of superpixels.

Preferably, each generated trapping site is associated with a superpixel of the detection sensor 16 in a correspondence table, and the optical steering device 30 is configured so that each electromagnetic flux emitted by particles trapped in the array of trapping sites is imaged on the superpixel associated with the trapping site corresponding to said electromagnetic flux (preferably at the center of the superpixel). On each superpixel:
▪ The electromagnetic flux collection is optimized. Indeed in case the optical quality is not perfect and the electromagnetic flux spreads over multiple pixels of the superpixel, the analog sum (binning) will allow to recover the total amount of electromagnetic flux without adding noise.
▪ The position of the electromagnetic beam does not need to be stable/known with a sub pixel resolution. This makes the detection function more reliable.

Preferably, in case the detection sensor is a CCD/EMCCD camera, the superpixel size is maximized so that the detection sensor 16 is used with the following properties:
▪ Given a detection phase of fixed duration, the readout duration (proportional to the number of superpixels read) is maximized (less superpixels to read). Therefore a lower readout noise electronic setting can be used and the sentivity is optimized.
▪ Given a sensitivity requirement, the number of superpixels that can be read is maximized.

Preferably, the quantum computing device 1 also comprises an electronic controller 38 configured to reconfigure the optical steering device 30 as a function of the generated array of trapping sites. This enables to reconfigure the optical steering device 30 for different arrays of trapping sites, rendering the device easily adaptable.

Preferably, the beam shaper 28 of the trapping sites generator 14 and the optical steering device 30 are configured in line with each other, for example by a same controller.

Preferably, the optical steering device 30 is a micro mirror array device or a spatial light modulator. Examples of micro mirror arrays that could be used for the optical steering device 30 are described in the article Song, Yuanping, Panas, Robert M., and Hopkins, Jonathan B. A review of micromirror arrays. United States: N. p., 2017. Web. doi:10.1016/j.precisioneng.2017.08.012.

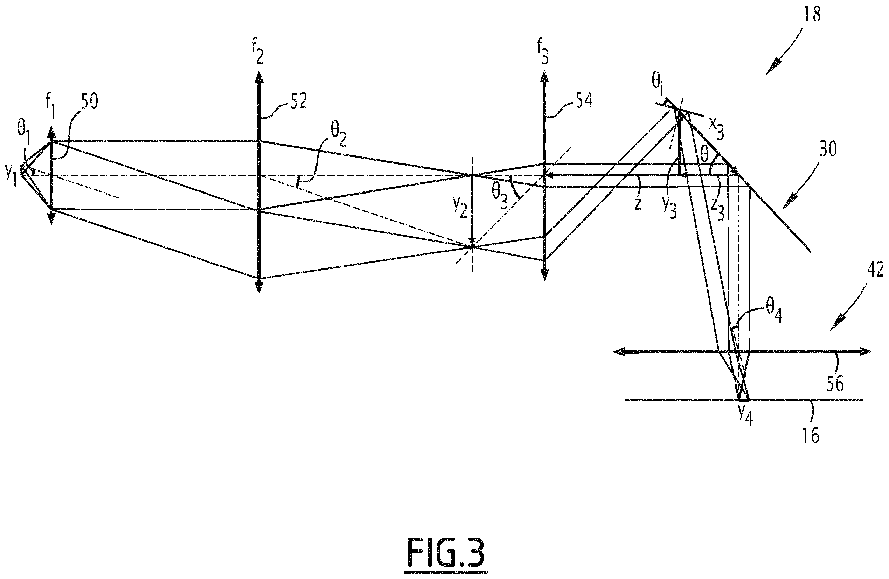

In an example of embodiment, as illustrated on figures 2 and 3, the optical system 18 also comprises:
- a first optical bloc 40 able to collimate, on the optical steering device 30, the electromagnetic flux emitted by particles trapped in the array of trapping sites, and
- a second optical bloc 42 able to focus, on the detection sensor 16, the electromagnetic flux outputting the optical steering device 30.

Preferably, as illustrated on figure 3, the optical steering device 30 is positioned relative to the first optical bloc 40 so that the electromagnetic flux corresponding to different trapping sites are separate when received on the optical steering device 30. This enables to easily redirect on the detection sensor 16, the electromagnetic flux coming from different trapping sites.

In the example of figures 2 and 3, the electromagnetic flux is conveyed from the atom plane (the atom position is noted *y*₁) to the CCD camera (the image position is noted *y₄).*

In this example, the first optical bloc 40 comprises three convergent lenses:
- a first convergent lens 50 collimating the flux emitting by particles trapped in the array of trapping sites, and
- two convergent lenses 52, 54 in a telescope configuration for reducing the diameter and enlarging the field.

Other embodiments are nonetheless possible.

In the example of figures 2 and 3, the second optical bloc 42 comprises one convergent lens 56 focusing the flux on the detection sensor 16. Other embodiments are nonetheless possible.

In the example, the figures 2 and 3 can be implemented with the following numerical parameters (see references on figure 3):
- focal lens f₁ of convergent lens 50: 10 millimeters (mm),
- focal lens f₂ of convergent lens 52: 200 mm,
- focal lens f₃ of convergent lens 54: 10 mm,
- focal lens f₄ of convergent lens 56: 30 mm,
- z = 75 mm,
- θ = 45 degree (°),
- y₁ ≤ 70 micrometer (µm), and
- y₄ ≤ 7 mm.

A method for imaging particles trapped in an array of trapping sites of a quantum computing device 1 will now be described.

The method comprises the generation of an array of trapping sites in the vacuum chamber 12 by the trapping sites generator 14.

The particles generated in the vacuum chamber 12 are loaded in the array of trapping sites.

The optical steering device 30 is configured so as to optimize the position of the image of the trapped particles on the detection sensor 16 according to the geometry of detection of the detection sensor 16.

In particular, each trapping site is associated with a superpixel of the detection sensor 16 and the association is memorized in a correspondence table. The configuration of the optical steering device 30 is carried out as a function of the correspondence table, so that each electromagnetic flux is imaged on the superpixel associated with the trapping site corresponding to said electromagnetic flux.

The particles trapped in the array of trapping sites are then imaged on the detection sensor 16, as a function of the electromagnetic flux received for each superpixel of the detection sensor 16.

Preferably, when the array of trapping sites is modified, the optical steering device 30 is reconfigured so that the flux coming from different trapping sites is imaged by different superpixels.

Hence, this solves the problem that, when imaging an arbitrary pattern of particles in a 2-dimensional register, it is not possible in the general case to have all the particles within a rectangular grid of CCD super pixels. Basically this was only possible for regular patterns. Because of this limitation, it was not possible to fully benefit from the advantages of the CCD or EMCCD sensors.

The invention, by using the optical steering device 30, enables to selectively modify the field of view of the imaged particles between the quantum register and the CCD sensor. This enables rearranging the images of the particles on the imaging plane on the CCD sensor into a regular pattern corresponding to the super pixels (e.g., so that each image of a particle ends up centered in a super pixel of the CCD sensor).

In other words, the pattern of light beams can be selectively switched from an irregular pattern (e.g. the particle pattern in the register, required for the operation of the quantum computer) to a regular pattern optimized for detection as illustrated on figure 4.

Such a geometric mapping allows to benefit from specific hardware features whose geometry is imposed by the technology. For instance, adjacent pixels analog almost noiseless sum of detected electrons in charged-couple device.

The left side of Figure 4 illustrates atoms A in a vacuum chamber 12, and the right side illustrates the superpixels SP of the CCD sensor where each atom A is imaged (image IM_{A}) on a respective superpixel SP (composed of 4 pixels P). On the right side, each black disk represents the image of a trapped particle. The geometry is different because the optical system 18 comprises an optical steering device 30 that distorts the initial geometry. We call this new geometry the so-called rearranged image of the trapped particles. Finally, gray dotted areas - gathering a number of pixels are so-called superpixels of the sensor device (the 2x2 superpixels being an example, any rectangular superpixel could be used). The superpixel definition is strongly associated to the sensor technology capability of performing analog operation (typically a sum) on the pixels inside a super pixel very efficiently.

Hence, the present invention enables a better detection of particles trapped in an array of trapping sites while keeping the sensitivity of detection of CCD or EMCCD cameras.

In particular, the use of superpixels instead of pixels implies many advantages:
- the photonic signal is spatially integrated. Eg. The light coming from the same source may impinge on many pixels due to fundamental limits (diffraction) or imaging quality.
- the total number of pixels to read is reduced: this means faster imagery or lower readout speed (associated with lowering of readout noise and increase of Signal to Noise Ratio).

The person skilled in the art will understand that the embodiments and variants described above in the description can all be combined provided that they are technically compatible.

## Claims

1. An optical system (18) for a quantum computing device (1), the quantum computing device (1) comprising:
- a vacuum chamber (12),
- a trapping sites generator (14) able to generate an array of trapping sites for particles in the vacuum chamber (12),
- a detection sensor (16) for detecting electromagnetic flux emitted by particles trapped in the array of trapping sites, the detection sensor (16) comprising a charged-couple device (CCD) sensor, the detection sensor (16) having a detection surface with a geometry of detection optimizing the detection of individual elements,
- the optical system (18) being configured for imaging, on the detection sensor (16), the electromagnetic flux emitted by each particle trapped in a trapping site,
the optical system (18) comprising an optical steering device (30) configured to optimize the position of the images of the trapped particles on the detection sensor (16) according to the geometry of detection of the detection sensor (16).

2. An optical system (18) according to claim 1, wherein the detection sensor (16) is configured to generate images made of superpixels, each superpixel resulting from the binning of multiple adjacent pixels of the images, the position of the superpixels on the images defining the geometry of detection of the detection sensor (16), the optical steering device (30) being configured to set the position of incidence of each electromagnetic flux on the detection sensor (16), so that the electromagnetic flux emitted by particles trapped in different trapping sites are imaged on different superpixels of the detection sensor (16).

3. An optical system (18) according to claim 2, wherein each generated trapping site is associated with a superpixel of the detection sensor (16) in a correspondence table, the optical steering device (30) being configured to set the position of incidence of each electromagnetic flux on the detection sensor (16), so that each electromagnetic flux is imaged on the superpixel associated with the trapping site corresponding to said electromagnetic flux.

4. An optical system (18) according to claim 2 or 3, wherein the optical steering device (30) is configured so that each electromagnetic flux emitted by particles trapped in the array of trapping sites is imaged sensibly at the center of a superpixel of the detection sensor (16).

5. An optical system (18) according to any one of claims 1 to 4, wherein the detection sensor (16) is configured to be used sequentially in two modes of operation: a first mode in which individual pixels are read, and a second mode in which only superpixels, formed by grouping adjacent pixels, are read, the first mode being used for calibration of the optical steering device (30).

6. An optical system (18) according to any one of claims 1 to 5, wherein the quantum computing device (1) also comprises a controller (38) configured to reconfigure the optical steering device (30) as a function of the generated array of trapping sites.

7. An optical system (18) according to any one of claims 1 to 6, wherein the optical system (18) comprises:
• a first optical bloc (40) able to collimate, on the optical steering device (30), the electromagnetic flux emitted by particles trapped in the array of trapping sites, and
• a second optical bloc (42) able to focus, on the detection sensor (16), the electromagnetic flux outputting the optical steering device (30).

8. An optical system (18) according to claim 7, wherein the first optical bloc (40) comprises at least three convergent lenses (52, 52, 54) and the second optical bloc (42) comprises at least one convergent lens (56).

9. An optical system (18) according to claim 7 or 8, wherein the optical steering device (30) is positioned relative to the first optical bloc (40) so that the electromagnetic flux corresponding to different trapping sites are separate when received on the optical steering device (30).

10. An optical system (18) according to any one of claims 1 to 9, wherein the optical steering device (30) is a micro mirror array device or a spatial light modulator.

11. An optical system (18) according to any one of claims 1 to 10, wherein the detection sensor (16) is an electron multiplication charged-coupled device sensor.

12. An optical system (18) according to any one of claims 1 to 11, wherein the trapping sites generator (14) comprises:
- a laser source (20) able to generate a laser beam,
- a beam shaper (28) able to shape the laser beam so as to obtain an array of trapping sites for particles when the laser beam is focused, and
- a focusing unit (29) able to focus the shaped laser beam on a target region of the vacuum chamber (12) so as to generate the array of trapping sites.

13. A quantum computing device (1), comprising:
- a vacuum chamber (12),
- a trapping sites generator (14) able to generate an array of trapping sites for particles in the vacuum chamber (12),
- a detection sensor (16) for detecting electromagnetic flux emitted by particles trapped in the array of trapping sites, the detection sensor (16) comprising a charged-couple device (CCD) sensor, the detection sensor (16) having a detection surface with a geometry of detection optimizing the detection of individual elements, and
- an optical system (18) for imaging, on the detection sensor (16), the electromagnetic flux emitted by each particle trapped in a trapping site, the optical system (18) being according to any one of claims 1 to 12.

14. A method for imaging particles trapped in an array of trapping sites of a quantum computing device (1) according to claim 13, the method comprising the following steps:
- generating an array of trapping sites in the vacuum chamber (12) by the trapping sites generator (14),
- loading particles in the array of trapping sites,
- configuring the optical steering device (30) so as to optimize the position of the images of the trapped particles on the detection sensor (16) according to the geometry of detection of the detection sensor (16), and
- detecting the particles trapped in the trapping sites by the detection sensor (16).

15. A method according to claim 14, wherein the detection sensor (16) is configured to generate images made of superpixels, each superpixel resulting from the binning of multiple adjacent pixels of the images, the position of the superpixels on the images defining the geometry of detection of the detection sensor (16), the method also comprising a step of associating each trapping site with a superpixel of the detection sensor (16) and memorizing the association in a correspondence table, the step of configuring the optical steering device (30) being carried out as a function of the correspondence table, so that each electromagnetic flux is imaged on the superpixel associated with the trapping site corresponding to said electromagnetic flux.
